(19) Europäisches Patentamt
European Patent Office
Office européen des brevets

(11) **EP 4 083 654 A1**

(12) **EUROPEAN PATENT APPLICATION**

(43) Date of publication:
**02.11.2022 Bulletin 2022/44**

(21) Application number: **22168669.4**

(22) Date of filing: **15.04.2022**

(51) International Patent Classification (IPC):
**G01S 7/35** (2006.01)   **G01S 13/34** (2006.01)

(52) Cooperative Patent Classification (CPC):
**G01S 7/356; G01S 13/34**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **30.04.2021 US 202117245613**

(71) Applicant: **NXP B.V.**
**5656 AG Eindhoven (NL)**

(72) Inventors:
• **Wu, Ryan Haoyun**
**5656 AG Eindhoven (NL)**

• **Li, Jun**
**5656 AG Eindhoven (NL)**
• **Brett, Maik**
**5656 AG Eindhoven (NL)**
• **Staudenmaier, Michael Andreas**
**5656 AG Eindhoven (NL)**

(74) Representative: **Schmütz, Christian Klaus Johannes**
**NXP Semiconductors Germany GmbH**
**Intellectual Property Group**
**Troplowitzstraße 20**
**22529 Hamburg (DE)**

(54) **RADAR COMMUNICATION WITH INTERFERENCE SUPPRESSION**

(57)   Aspects of the present disclosure are directed to implementations involving the transmission of radar signals and the processing of reflections of those signals as received from a target. As may be implemented with one or more embodiments, a spectrogram may be produced by converting reflections, of transmitted radar signals from a target, into a time-frequency domain using a time-frequency analysis. One or more suppression thresholds is determined for at least one frequency signal in the spectrogram, based on frequency characteristics of the converted reflections. A range response is constructed, characterizing the target and having interference signals removed in the time-frequency domain, by converting (into the range response) selected ones of the frequency signals in the spectrogram having a magnitude within the suppression threshold.

FIG. 1

EP 4 083 654 A1

**Description**

OVERVIEW

Aspects of various embodiments are directed to processing radar signal reflections to characterize a target, with interference suppression.

Radar communications are susceptible to interference, as may come from other radars or a variety of sources. This interference can pose challenges to accurately and adequately processing received radar signal reflections. A variety of approaches have been implemented for mitigating such interference, or otherwise processing signals with the interference. However many such approaches result in undesirably low signal-to-noise ratio (SNR), for instance as may relate to the loss of samples. Mitigation of interference can be particularly challenging when an interfering radar system's chirps are moderately to highly correlated to chirps to be processed in frequency and in time.

These and other matters have presented challenges to efficiencies of radar communications, for a variety of applications.

SUMMARY

The present invention is set out in the appended set of claims.

Various example embodiments are directed to issues such as those addressed above and/or others which may become apparent from the following disclosure concerning the communication and processing of radar signals, with suppression of interference.

In certain example embodiments, aspects of the present disclosure involve converting received reflections from a target into a time-frequency domain, and constructing signals (*e.g.,* a range response) that characterize the target by identifying and removing interference in the time-frequency domain. Such an approach may, for example, involve setting a threshold signal level, above which interference is present and which provides remaining signal data (within the threshold) that is sufficient for characterizing the target.

In a more specific example embodiment, an apparatus includes communication circuitry to transmit radar signals and to receive reflections of the transmitted radar signals from a target, and processing circuitry. The processing circuitry is to produce a spectrogram by converting the reflections into a time-frequency domain using a time-frequency analysis, and to determine at least one suppression threshold for at least one frequency signal in the spectrogram based on frequency characteristics of the converted reflections. The processing circuitry is further to construct a range response characterizing the target and having interference signals removed in the time-frequency domain by converting, into the range response, selected ones of the frequency signals in the spectrogram having a magnitude within the suppression threshold.

In another specific example embodiment, a spectrogram is produced by converting reflections, of transmitted radar signals from a target, into a time-frequency domain using a time-frequency analysis. At least one suppression threshold for at least one frequency signal in the spectrogram is determined based on frequency characteristics of the converted reflections. A range response is constructed, characterizing the target and having interference signals removed in the time-frequency domain, by converting (into the range response) selected ones of the frequency signals in the spectrogram having a magnitude within the suppression threshold.

The above discussion/summary is not intended to describe each embodiment or every implementation of the present disclosure. The figures and detailed description that follow also exemplify various embodiments.

BRIEF DESCRIPTION OF FIGURES

Various example embodiments may be more completely understood in consideration of the following detailed description in connection with the accompanying drawings, in which:

FIG. 1 shows a radar apparatus, as may be implemented in accordance with the present disclosure;
FIG. 2 shows a radar apparatus 200 with interference suppression, in accordance with the present disclosure;
FIG. 3 shows a time-frequency-domain spectrogram thresholding and zeroing interference cancellation approach, in accordance with the present disclosure; and
FIG. 4 shows an ADC sample processing flow, as may be implemented with a sparse linear regression approach in accordance with the present disclosure.

While various embodiments discussed herein are amenable to modifications and alternative forms, aspects thereof have been shown by way of example in the drawings and will be described in detail. It should be understood, however, that the intention is not to limit the disclosure to the particular embodiments described. On the contrary, the intention is to cover all modifications, equivalents, and alternatives falling within the scope of the disclosure including aspects defined in the claims. In addition, the term "example" as used throughout this application is only by way of illustration, and not limitation.

DETAILED DESCRIPTION

Aspects of the present disclosure are believed to be applicable to a variety of different types of apparatuses, systems and methods involving radar signal processing relative to interference in the signals. In certain implementations, aspects of the present disclosure have been shown to be beneficial when used in the context of removing interference from reflected radar signals, which may improve subsequent processing of such signals for ascertaining positional characteristics of objects in an environment. In some embodiments, time-based radar signal reflections are converted into a frequency domain. Portions of those signals in which interference is strong are identified and used to set a threshold magnitude of desirable signals that is sufficient to provide useful data. Portions of the signals that exceed such a threshold may be identified as interference and either discarded, set to zero value or otherwise not used, and the desirable signals in the frequency domain can be used to reconstruct the reflections (e.g., as a range response with interference removed). While not necessarily so limited, various aspects may be appreciated through the following discussion of non-limiting examples which use exemplary contexts.

Accordingly, in the following description various specific details are set forth to describe specific examples presented herein. It should be apparent to one skilled in the art, however, that one or more other examples and/or variations of these examples may be practiced without all the specific details given below. In other instances, well known features have not been described in detail so as not to obscure the description of the examples herein. For ease of illustration, the same reference numerals may be used in different diagrams to refer to the same elements or additional instances of the same element. Also, although aspects and features may in some cases be described in individual figures, it will be appreciated that features from one figure or embodiment can be combined with features of another figure or embodiment even though the combination is not explicitly shown or explicitly described as a combination.

Various aspects of the disclosure are directed to linear frequency modulation (LFM) automotive radars that operate in highly congested spectrum environments, such as those in which LFM radars severely interfere with each other. For instance, various aspects are directed to embodiments in which vehicles may be equipped with one or multiple automotive radar systems. Raw ADC samples may be processed to remove interference components before subsequent processing is carried out.

In some implementations, portions of converted radar reflections exhibiting strong interference are identified, based on an interference threshold that is sufficient to provide useful data, and those signals within the threshold are utilized in determining a range response for a target. In certain instances, raw ADC samples are processed to remove interference components before subsequent range, Doppler, and angle processing are carried out. The removal of interference components may be achieved by 1) producing a spectrogram using short-time Fourier Transform (STFT); 2) for each STFT frequency signal, determining a suppression threshold based on statistical analysis; 3) for each STFT frequency signal, suppressing interference by setting spectrogram samples that are above the threshold to zero; and 4) constructing an interference-suppressed signal (e.g., a range response). Accordingly, portions of the interference signal may be selectively removed in the time-frequency domain, which may provide desirable interference removal (e.g., with interference appearing as chirps in sinusoidal tones), facilitating signal recovery in severely interfered environments.

In some instances, the fourth step noted above includes computing an inverse STFT of the interference-suppressed spectrogram and obtaining interference-suppressed ADC samples for subsequent processing. Alternatively, a sparse linear regression problem model may be constructed, with the interfered-suppressed spectrogram as an observation vector, in which the range spectrum is estimated using a sparse signal estimation approach. This may reduce ambiguous sidelobes and retain the SNR of a target signal.

In a particular example, a long signal is broken into chunks corresponding to relatively smaller time windows, and a time frequency output is used to generate an interference detection threshold. Given a spectrogram for every spectral line/row, a threshold may be produced, and a histogram analysis may identify a target signal magnitude. A threshold to identify signals above that magnitude as being noise can be set, and each element of the spectral row may be checked against the threshold.

Range responses may be constructed using a variety of approaches. In one embodiment, time-frequency domain spectrogram thresholding and zeroing interference cancellation is carried out. ADC samples are processed in the time-frequency domain for thresholding and zeroing out of interference components (e.g., in a spectrogram of the samples). Interfering LFM radar signals may be identified as low-pass filtered linear-ramp signals, such as chirps, after deramp mixing. Interference signals may be ascertained via distinct non-zero-slope linear features in a spectrogram for all interference signals, and post-mixer interference "chirps" in this context cross targets' flat tones in time and frequency. Spectrogram samples that are likely belonging to interference are thus identified and removed or otherwise not used, which further mitigates degradation of a target (received) signal. Once the interference components are removed in the time-frequency domain, the spectrogram may be converted back to time-domain ADC samples, with the subsequent processes being carried out in accordance with further radar processing. Removal of the interference components in the time-frequency domain may be carried out by zeroing or nulling, or by applying attenuations to the interference components in general.

Another embodiment is directed to nulled spectrogram sparse linear regression for radar range spectrum estimation in a radar environment subject to interference. A received ADC signal, once represented in the spectrogram domain (*e.g.*, via STFT), is processed so that interfered samples can be removed or otherwise suppressed in the time-frequency domain by thresholding and zeroing. The interfered-sample-removed spectrogram can then be inverse STFT'd back to the time domain and to produce interference-suppressed ADC samples. In certain implementations, operations are carried out to improve SNR and suppress range spectrum ambiguous sidelobes. For instance, an interfered sample detection threshold may be determined in each frequency signal of the spectrogram to determine which spectrogram "pixel" is more likely to contain interference. The interference-free range spectrum signal may be modelled using the spectrogram pixels that are deemed interference-free and the range spectrum may be estimated accordingly. Deletion of an interfered time-frequency sample may be quasi random, such that the resulting model better meets a sparse signal recovery criterion that ensures reliable reconstruction of the sparse range spectrum signal. After the removal of time-frequency interference samples, a nulled spectrogram sparse linear regression approach may be used to reconstruct the range spectrum to retain SNR as well as mitigate ambiguous sidelobes.

In accordance with a particular embodiment, an apparatus includes processing circuitry that is configured to produce a spectrogram by converting reflections of radar signals from a target into a time-frequency domain using a time-frequency analysis. The processing circuitry may determine at least one suppression threshold for at least one frequency signal in the spectrogram based on frequency characteristics of the converted reflections (*e.g.*, based on statistical analysis). The processing circuitry may further be configured to construct a range response characterizing the target and having interference signals removed in the time-frequency domain by converting, into the range response, selected ones of the frequency signals in the spectrogram having a magnitude within the suppression threshold. Accordingly, radar reflections (*e.g.*, signals from an ADC in a receiver) may be processed to remove noise in the time-frequency domain), and further processed to provide an output useful in characterizing the target's position.

In various implementations, the apparatus includes communication circuitry configured to transmit the radar signals and to receive the reflections of the transmitted radar signals from the target, with the processing circuitry configured therewith to process the reflections. For instance, one or more transmitters and receivers with related antennae may operate to transmit and receive multiple radar signals and their reflections.

The processing circuitry may construct the range response in a variety of manners, with the response characterizing aspects of the target via the received reflections. In a particular implementation, the processing circuitry suppresses interference components of the spectrogram that are above the one or more suppression thresholds, therein providing an interference-suppressed spectrogram. The interference-suppressed spectrogram may be converted into interference-suppressed reconstructed reflections using an inverse time-frequency analysis. The reconstructed reflections may be transformed to the range response using a frequency analysis.

In certain embodiments, the processing circuitry converts the reflections into a time-frequency domain using a STFT. The range response is constructed by performing an inverse STFT on the selected frequency signals to provide reconstructed reflections, and performing an inverse frequency transform on the reconstructed reflections to generate an output including the range response.

The processing circuitry may construct the range response by reducing ambiguous sidelobes of the reflections. This may include constructing a sparse linear regression problem model with the selected frequency signals as an observation vector, and constructing the range response using sparse signal estimation.

In a more particular embodiment, the processing circuitry is configured to produce the spectrogram by producing samples of the reflected signals in respective time windows, and to determine the suppression threshold by determining a suppression threshold for each time window. The processing circuitry is further configured to construct the range response by converting, for each time window, selected ones of the frequency signals in the time window having a frequency within the suppression threshold for that time window.

The suppression threshold may be set in one or more of a variety of manners. For instance, for at least one frequency signal, a target signal magnitude may be determined and the suppression threshold may be set for that frequency signal as a magnitude that exceeds the target signal magnitude. In certain implementations, a suppression threshold may be set for each spectral line in the spectrogram by identifying a target signal magnitude for each spectral line. The suppression threshold for each spectral line may be set as a magnitude that exceeds the target signal magnitude for that spectral line. This may be carried out for multiple spectral lines, and the range response may be constructed by, for each spectral line, converting ones of the frequency signals in the spectral line within the suppression threshold for that spectral line. One or more of the suppression thresholds may be set using a histogram analysis to identify a target signal magnitude in which signals above the target signal magnitude are identified as being interference.

The suppression thresholds may be set according to the lowest target magnitude levels that a particular system is designed to process. As such, the thresholds may not set to be lower than such levels to prevent undesirable removal of target signal. Each frequency signal of the spectrogram may correspond to a physical section of ranges in which the target may reside. The lowest target magnitude level may vary with the frequency of the spectrogram as the target magnitude reduces with range.

In various contexts, the suppression threshold may be set to reflect a magnitude, as may relate to a complex amplitude of a frequency signal represented in the spectrogram. Accordingly, a time-frequency analysis can be performed to obtain a spectrogram, and select ones of time-frequency components in the spectrogram (over time) are utilized to provide a range response. For instance, some of the spectrogram components may be suppressed by setting their value to zero or otherwise not using the components, with the remaining components being used.

Various embodiments are directed toward methods for suppressing interference in radar reflections, as may be implemented in connection with the operation of apparatuses as characterized herein. Accordingly, various methods may be carried out in accordance with the above discussion. For instance, in a particular embodiment, a spectrogram is produced by converting reflections of radar signals received from a target, into a time-frequency domain using a time-frequency analysis. One or more suppression thresholds may be determined for at least one frequency signal in the spectrogram, based on frequency characteristics of the converted reflections (*e.g.*, using a histogram analysis and/or statistical analysis) and, for example, the minimum target magnitude levels the system is designed to process. A range response may be constructed, which characterizes the target with interference signals therein removed or otherwise suppressed in the time-frequency domain. For instance, selected ones the reflections in the time-frequency domain as characterized by frequency signals in the spectrogram and having a magnitude within the suppression threshold may be converted (*e.g.*, into the range response).

Constructing the range response may include suppressing interference components of the spectrogram that are above the one or more suppression thresholds and therein providing an interference-suppressed spectrogram, converting the interference-suppressed spectrogram into interference-suppressed reconstructed reflections using an inverse time-frequency analysis, and transforming the reconstructed reflections to the range response using a frequency analysis. The reflections may be converted into a time-frequency domain using a STFT, with the range response being constructed by performing an inverse STFT on the selected frequency signals to provide reconstructed reflections, and performing an inverse frequency transform on the reconstructed reflections to generate an output including the range response.

The suppression thresholds may be set by determining, for at least one frequency signal, a target signal magnitude and setting the suppression threshold for that frequency signal as a magnitude that exceeds the target signal magnitude. The suppression thresholds for each spectral line in the spectrogram may be determined identifying a target signal magnitude for each spectral line, and setting the suppression threshold for each spectral line as a magnitude that exceeds the target signal magnitude for each spectral line. The range response may then be constructed by, for each spectral line, converting ones of the frequency signals in the spectral line within the suppression threshold for that spectral line.

The range response may be constructed by setting values of ones of the frequency signals that are above the threshold to zero, and/or by reducing ambiguous sidelobes of the reflections in which a sparse linear regression problem model is constructed with the selected frequency signals as an observation vector with sparse signal estimation used to construct the range response.

In certain implementations, samples of the reflected signals are produced/used in respective time windows, and one or more suppression thresholds are determined for each time window. Selected ones of the frequency signals in the time window having a frequency within the suppression threshold for that time window may be converted for constructing the range response.

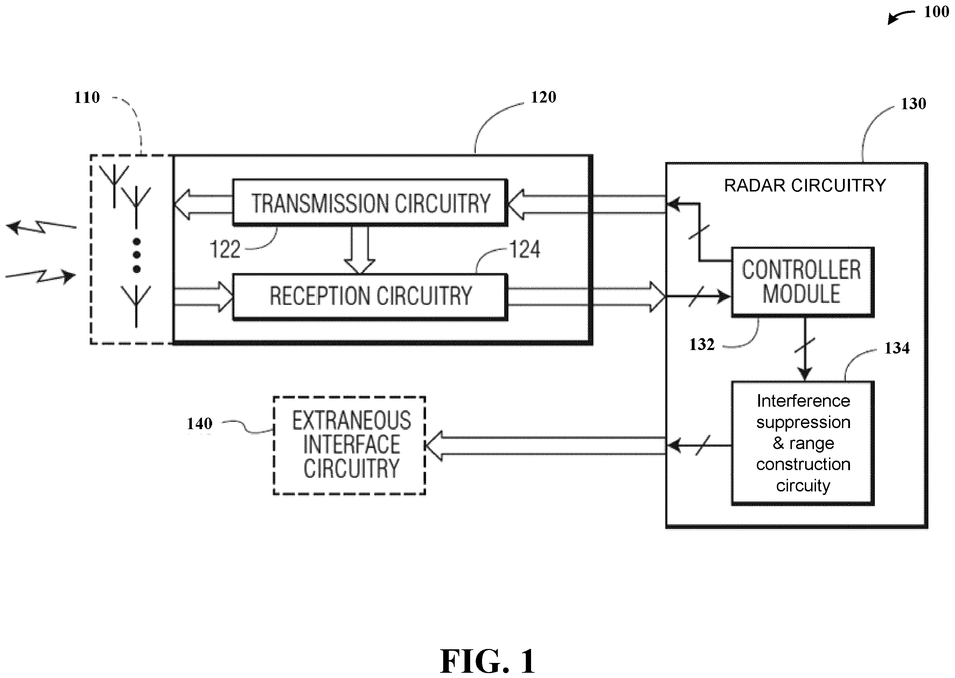

Turning now to the figures, Figure 1 shows a radar apparatus 100, as may be implemented in accordance with one or more embodiments. The apparatus 100 includes an antenna array 110, radar communication circuitry 120, and radar processing circuitry 130 (which may further interface with interface circuitry 140, for example automotive interface circuitry). The antenna array 110 includes a plurality of antennas, and the radar communication circuitry 120 includes transmission circuitry 122 and reception circuitry 124 (*e.g.,* a plurality of transmitters and receivers). The radar processing circuitry 130 (*e.g.,* radar MCPU) includes a controller module 132 and interference suppression and range construction circuitry 134.

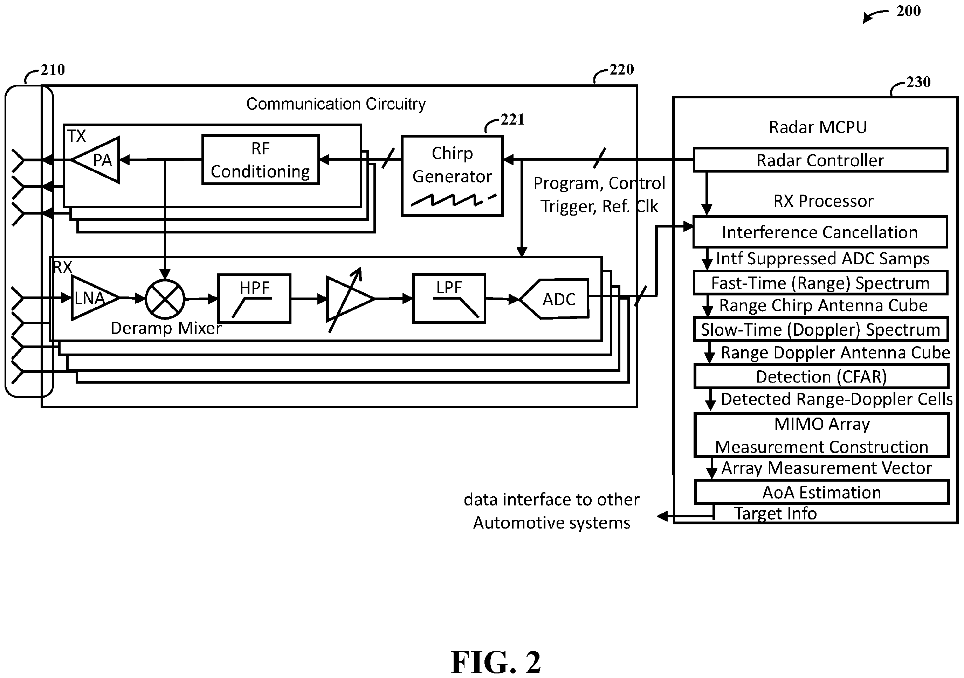

These components of apparatus 100 may be operable to provide radar communications, in connection with signals communicated with the radar processing circuitry 130, utilizing interference suppression in the time-frequency domain and as may be implemented in accordance with one or more embodiments herein. For instance, positional characteristics of a target from which radar signals transmitted by the transmission circuitry 122 via the antenna array 110, and which are reflected from the target and received by the reception circuitry via the antenna array along with one or more interference signals, may be ascertained by interference suppression in accordance with one or more embodiments herein. In certain embodiments, the transmission circuitry 122 and reception circuitry 124 are respectively implemented in accordance with the transmitter and receiver circuitry as characterized in communication circuitry 220 in Figure 2.

Figure 2 shows a radar apparatus 200 with interference suppression, as may be utilized for example with 76~81GHz FMCW automotive radar systems. The apparatus 200 includes an antenna array 210, communication circuitry 220 and radar processing circuitry 230, and is operable to suppress interference utilizing aspects of received signals in the time-frequency domain. The communication circuitry 220 includes a plurality of transmitters and receivers (*e.g.,* three transmitters and four receivers). The transmitters may include a chirp generator 221, and may include other transmission circuitry such as conditioning and amplifier circuits, and operate in response to radar control circuitry within the radar processing circuitry 230.

The receivers may include amplifier, filtering and other circuits as useful for receiving radar signals. For instance, each receiver may mix a return radar reflection with a transmitted chirp and filter the result to generate deramped IF (intermediate frequency) signals to be sampled by analog-to-digital converters (ADCs) and processed by a radar MCPU to mitigate interference via conversion of the ADC signals into the time-frequency domain and analysis therein to determine and implement a suppression threshold for removing interference, as characterized herein. The signals can then be converted back to provide interference-suppressed versions of the ADC signals, which are used to produce range and Doppler responses for each receiver channel. The range-Doppler response maps of the receivers from the transmitted signals may be aggregated to form a complete MIMO array measurement data cube consisting of range-Doppler response maps of antenna elements of a constructed MIMO virtual array. The range-Doppler responses may be non-coherently integrated and target detection may be attempted on the energy-combined range-Doppler map. A detection algorithm, such as may relate to variants of the CFAR algorithm, may be used to identify the range-Doppler cells in which targets may be present. For each detection cell, the array measurement vector may then be extracted and processed for identifying the incident angles of any target returns contained in the cell. The radar processing circuitry 230 may carry out angle estimation and target tracking, using the compensated output array vectors, for tracking positional characteristics of targets from which reflections are received. Such target information may further be provided via a data interface to external systems, such as automotive systems.

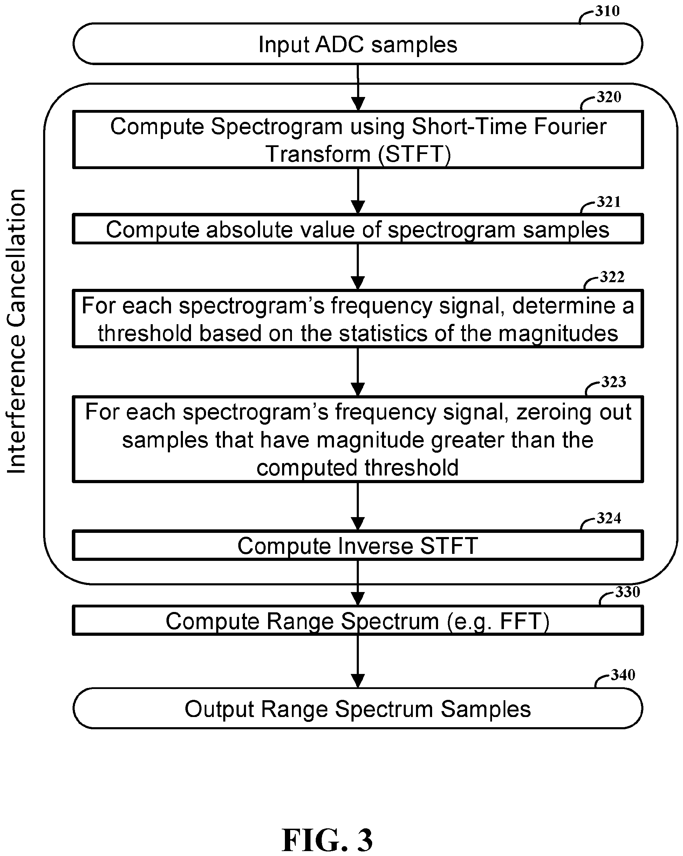

Figure 3 shows a time-frequency-domain spectrogram thresholding and zeroing interference cancellation approach, in accordance with the present disclosure. Raw (unprocessed) ADC samples for each chirp and receiver are received at block 310 and processed to remove the interference components before the normal range FFT processing is carried out. Specifically, a spectrogram is computed using a STFT at block 320, such as may involve a series of shorter FFTs operated on windowed ADC samples.

Parameters including window size and stride size may be controlled for the STFT process. For an input length-N ADC sample vector such as $[x_1, x_2,..., x_N]$, with an STFT window size W [samples] and a stride size S [samples], the k-th time-bin STFT output may be calculated based on the following equations. The FFT computation can be augmented by utilizing a standard tapering window to reduce sidelobes in the STFT spectrum.

$$\mathbf{X}_{STFT} = \begin{bmatrix} \mathbf{X}_{STFT,1} \\ \mathbf{X}_{STFT,2} \\ \vdots \\ \mathbf{X}_{STFT,K} \end{bmatrix}$$

$$\mathbf{X}_{STFT,k} = FFT\{\mathbf{x}_{STFT,k}\} \quad (k = 1,2,...K)$$

$$\mathbf{X}_{STFT,k} = [x_{1+(k-1)*S}, ..., x_{W+(k-1)*S}]$$

For each STFT frequency, the frequency signal's magnitudes (absolute values) are computed at block 321, and a histogram may be produced based on the magnitudes. A threshold is then computed at block 322 (*e.g.,* based on the histogram). For instance, the threshold may be determined based on the peak count and the accumulative counts (sum of all counts from the lowest-value bine to the peak bin) at the peak bin.

$$TH = Peak\ Bin\ Magnitude + Bin\ Width * \left(1 - \frac{Accumulative\ Peak\ Bin\ Count - Peak\ Bin\ Count}{Peak\ Bin\ Count}\right)$$

In another example, the threshold is determined based on a given percentile point. The approximate threshold value can be obtained by interpolating the cumulative histogram curve. More precise threshold values can be obtained by first identifying the histogram bin in which the percentile point resides in, sorting the members of the bin and interpolating on the sorted bin members. A second nominal-signal threshold may be used to prevent unnecessary zeroing of non-interference signals. The nominal signal threshold may be obtained from a link margin analysis for a given range, target RCS assumption, and may include STFT integration gain. In some instances, spectrogram components with magnitudes lower than this second nominal-signal threshold are not be suppressed or zeroed to prevent undesirable removal of target signals. Because each frequency of the spectrogram maps to a section of range a target may reside in, and a target's magnitude reduces with range, different threshold values may be set for this second nominal-signal threshold with respect to different frequencies of the spectrogram.

Once the threshold is computed for a frequency signal (*e.g.,* a row of the spectrogram), spectrogram samples with magnitudes greater than the threshold is set to zero at block 323. An example thresholding and zeroing result may involve checking each row of the spectrogram against a computed threshold value, and samples that have magnitudes greater than the threshold may be zeroed or nulled out, or attenuated in general.

Once the interference components of the spectrogram are zeroed, the spectrogram may be converted back to time-domain ADC samples at block 324, by reversing the STFT process using inverse STFT. If $\check{x}_{STFT,k}$ is denoted as the $k$-th row of the spectrogram matrix after the thresholding and zeroing process is completed, the inverse STFT may compute the $k$-th short-time window signal using the following equation. If a tapering window is applied in the forward STFT process, an inverse tapering window may be used to recover the time domain samples with correct amplitudes.

$$\check{\mathbf{x}}_k = IFFT\{\check{\mathbf{X}}_{STFT,k}\}$$

$$= [\check{x}_{k,\ 1+(k-1)*S}, \ldots, \check{x}_{k,\ W+(k-1)*S}]$$

The process may be repeated for each row of the interference-suppressed spectrogram to obtain a short-time window signal. The final ADC sample stream may be reconstructed from these overlapped short-time window signals by taking the mean of the multiple values for each ADC sample position. When the stride equals the window length, there is no overlap and the reconstructed ADC sample stream may be the concatenated version of the IFFT outputs.

At block 330, the ADC samples can be processed to compute a range spectrum (e.g., using FFT), and range spectrum samples may be output at block 340. In some implementations, the process of STFT, thresholding and zeroing, inverse STFT, and then computing the range spectrum using FFT may be streamlined by computing a zero-padded STFT to the length of the range spectrum output length, conducting thresholding and zeroing, and then summing the interference-suppressed STFT short-time spectrums over the short-time. The zero-padded STFT may involve computing FFT of the windowed ADC samples of length W which are zero-padded to length N before applying the FFT.

Referring again to block 330, spectral estimation techniques such as Sparse Bayesian Learning and Bayesian Linear Regression with Cauchy Prior may be used to address sidelobes. In connection with this approach, it has been recognized/discovered that transforming ADC samples into the time-frequency domain for interfered-sample detection and removal can provide interference suppression while maintaining desirable signal properties, such as low SNR. It has further been recognized/discovered that the use of an inverse STFT to reconstruct an interference-suppressed ADC sample stream for subsequent processing provides useful processing in interference-laden environments.

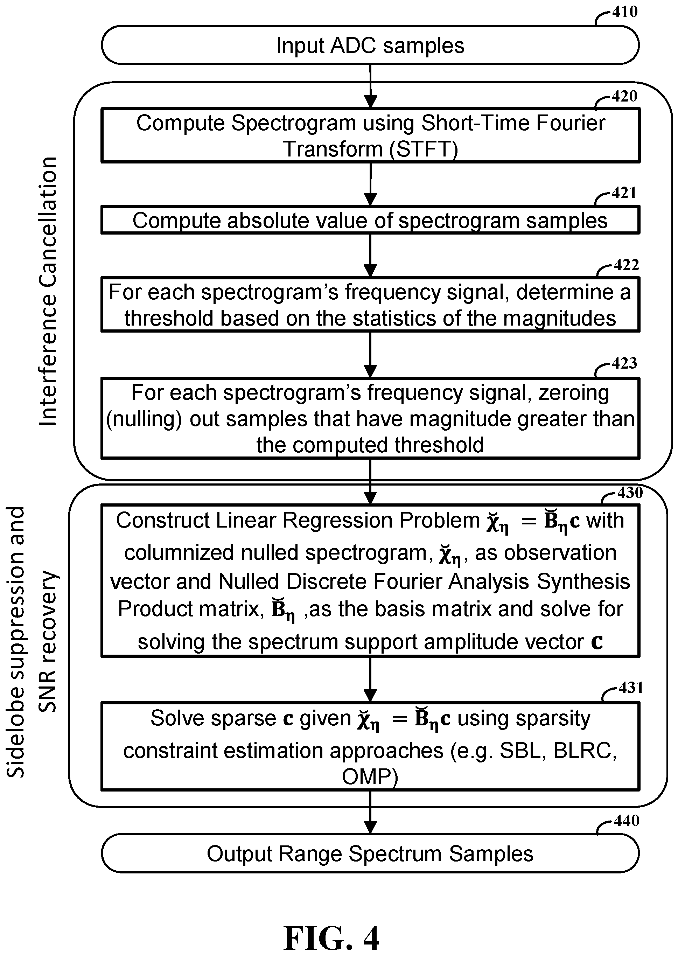

Figure 4 shows an ADC sample processing flow, as may be implemented with a sparse linear regression approach for interference suppression. This may be carried out, for example, to implement nulled-spectrogram sparse linear regression, involving time-frequency domain thresholding and zeroing, as may be used for suppressing interference and reconstructing a range spectrum (with interference suppression), and with the capability of retaining SNR and suppressing ambiguous sidelobes.

At block 410, ADC samples are received and thereafter processed to effect interference cancellation. A spectrogram is computed using a STFT at block 420, such as may involve a series of shorter FFTs operated on windowed ADC samples. For each STFT frequency, the frequency signal's magnitudes (absolute values) are computed at block 421. A threshold is then computed at block 422 based on statistics of the magnitudes. Once the threshold is computed for each frequency signal, spectrogram samples with magnitudes greater than the threshold is set to zero at block 423. This interference cancellation may, for example, be carried out in a manner similar to that discussed in connection with Figure 3.

Sidelobe suppression and SNR recovery are carried out at blocks 430 and 431, in which a linear regression problem is constructed at block 430 and sparse solution solving carried out at block 431. At block 440, range spectrum samples are output.

More specifically, processing may be carried out for an ADC sample vector x where $x = [x_1, x_2, \ldots, x_N]^T$ and a windowed version of x is $\check{x}_k$, where $\check{x}_k = [\check{x}_{k,1}, \check{x}_{k,2}, \ldots, \check{x}_{k,W}]^T = [x_{1+(k-1)*S}, \ldots, x_{W+(k-1)*S}]^T$ where $W$ is the STFT's window size in [samples] and $S$ is a STFT sliding window's stride in [samples]. The $k$-th window's STFT, $\chi_k$ where $\chi_k = [\chi_{k,1}, \chi_{k,2}, \ldots, \chi_{k,W}]^T$

is computed using the following equation, which computes $\breve{\chi}_{k,m}$, may be denoted as the $m$-th element of the $k$-th STFT output vector.

$$\breve{\chi}_{k,j} = \sum_{i=1}^{W} x_{i+(k-1)*S}\, e^{-j2\pi\frac{(i-1)(j-1)}{W}} = \sum_{i=1}^{W} \breve{x}_{k,i}\, e^{-j2\pi\frac{(i-1)(j-1)}{W}}$$

$j$ = 1,2 ...,$W$ (index for the elements of a STFT output vector)
$k$ = 1,2 ...,$L$ (index for STFT windows)

Following the definition of a Discrete Fourier Transform (DFT), the above can be written in matrix-vector form as the equation below, where Dw is a $W \times W$ square DFT matrix evaluated on a W-point uniform frequency grid.

$$\breve{\boldsymbol{\chi}}_k = \begin{bmatrix} \breve{\chi}_{k,1} \\ \breve{\chi}_{k,2} \\ \vdots \\ \breve{\chi}_{k,W} \end{bmatrix}$$

$$= \begin{bmatrix} e^{-j2\pi\frac{(1-1)(1-1)}{W}} & e^{-j2\pi\frac{(2-1)(1-1)}{W}} & e^{-j2\pi\frac{(3-1)(1-1)}{W}} & e^{-j2\pi\frac{(W-1)(1-1)}{W}} \\ e^{-j2\pi\frac{(1-1)(2-1)}{W}} & e^{-j2\pi\frac{(2-1)(2-1)}{W}} & e^{-j2\pi\frac{(3-1)(2-1)}{W}} & e^{-j2\pi\frac{(W-1)(2-1)}{W}} \\ e^{-j2\pi\frac{(1-1)(3-1)}{W}} & e^{-j2\pi\frac{(2-1)(3-1)}{W}} & e^{-j2\pi\frac{(3-1)(3-1)}{W}} & \cdots & e^{-j2\pi\frac{(W-1)(3-1)}{W}} \\ \vdots & \vdots & \vdots & & \vdots \\ e^{-j2\pi\frac{(1-1)(W-1)}{W}} & e^{-j2\pi\frac{(2-1)(W-1)}{W}} & e^{-j2\pi\frac{(3-1)(W-1)}{W}} & e^{-j2\pi\frac{(W-1)(W-1)}{W}} \end{bmatrix} \begin{bmatrix} \breve{x}_{k,1} \\ \breve{x}_{k,2} \\ \vdots \\ \breve{x}_{k,W} \end{bmatrix}$$

$$\equiv \mathbf{D}_W \breve{\mathbf{x}}_k$$

The full STFT matrix can be columnized and represented as the following equation, where 0 is a $W \times W$ square matrix of zeros.

$$\breve{\boldsymbol{\chi}} = \begin{bmatrix} \breve{\boldsymbol{\chi}}_1 \\ \breve{\boldsymbol{\chi}}_2 \\ \vdots \\ \breve{\boldsymbol{\chi}}_L \end{bmatrix} = \begin{bmatrix} \begin{bmatrix} \breve{\chi}_{1,1} \\ \breve{\chi}_{1,1} \\ \vdots \\ \breve{\chi}_{1,W} \end{bmatrix} \\ \begin{bmatrix} \breve{\chi}_{2,1} \\ \breve{\chi}_{2,1} \\ \vdots \\ \breve{\chi}_{2,W} \end{bmatrix} \\ \vdots \\ \begin{bmatrix} \breve{\chi}_{L,1} \\ \breve{\chi}_{L,1} \\ \vdots \\ \breve{\chi}_{L,W} \end{bmatrix} \end{bmatrix} = \begin{bmatrix} \mathbf{D}_W & \mathbf{0} & & \mathbf{0} \\ \mathbf{0} & \mathbf{D}_W & \cdots & \mathbf{0} \\ \vdots & \vdots & & \vdots \\ \mathbf{0} & \mathbf{0} & & \mathbf{D}_W \end{bmatrix} \begin{bmatrix} \breve{\mathbf{x}}_1 \\ \breve{\mathbf{x}}_2 \\ \vdots \\ \breve{\mathbf{x}}_L \end{bmatrix}$$

The expression of the ADC samples of each STFT window may be converted into a Fourier Synthesis form, that is a matrix of columns of steering vector, $\breve{A}$ times a support amplitude vector, c. This is model is consistent with the actual signal composition because, by definition, the ADC sample vector is made up of flat sinusoidal tones. An i-th ADC sample of a $k$-th window may be modelled using the following equation.

$$\breve{x}_{k,i} = \sum_{m=1}^{M} c_m\, e^{j2\pi\frac{(m-1)(i-1+(k-1)*S)}{M}}$$

$i$ = 1,2 ...,$W$ (index for ADC samples in a STFT window)
$m$ = 1,2 ...,$M$ (index for suports of the range spectrum output)

With the above equation, the windowed ADC samples can be expressed as a discrete Fourier synthesis signal using the following equations and an expression of the columnized spectrogram can be obtained as a product of a discrete Fourier analysis (i.e. DFT) matrix ($\breve{D}$), discrete Fourier synthesis (i.e. inverse DFT) matrix ($\breve{A}$), and the spectrum support amplitude vector (c).

$$\breve{x}_k = \begin{bmatrix} \breve{x}_{k,1} \\ \breve{x}_{k,2} \\ \vdots \\ \breve{x}_{k,W} \end{bmatrix}$$

$$= \begin{bmatrix} e^{j2\pi\frac{(1-1)(1-1+(k-1)*S)}{M}} & e^{j2\pi\frac{(2-1)(1-1+(k-1)*S)}{M}} & e^{j2\pi\frac{(3-1)(1-1+(k-1)*S)}{M}} & & e^{j2\pi\frac{(M-1)(1-1+(k-1)*S)}{M}} \\ e^{j2\pi\frac{(1-1)(2-1+(k-1)*S)}{M}} & e^{j2\pi\frac{(2-1)(2-1+(k-1)*S)}{M}} & e^{j2\pi\frac{(3-1)(2-1+(k-1)*S)}{M}} & & e^{j2\pi\frac{(M-1)(2-1+(k-1)*S)}{M}} \\ e^{j2\pi\frac{(1-1)(3-1+(k-1)*S)}{M}} & e^{j2\pi\frac{(2-1)(3-1+(k-1)*S)}{M}} & e^{j2\pi\frac{(3-1)(3-1+(k-1)*S)}{M}} & \cdots & e^{j2\pi\frac{(M-1)(3-1+(k-1)*S)}{M}} \\ \vdots & \vdots & \vdots & & \vdots \\ e^{j2\pi\frac{(1-1)(W-1+(k-1)*S)}{M}} & e^{j2\pi\frac{(2-1)(W-1+(k-1)*S)}{M}} & e^{j2\pi\frac{(3-1)(W-1+(k-1)*S)}{M}} & & e^{j2\pi\frac{(M-1)(W-1+(k-1)*S)}{M}} \end{bmatrix} \begin{bmatrix} c_1 \\ c_2 \\ \vdots \\ c_M \end{bmatrix}$$

$$= \frac{1}{M} \begin{bmatrix} 1 & e^{j2\pi\frac{(k-1)*S}{M}} & e^{j2\pi\frac{2(k-1)*S}{M}} & & e^{j2\pi\frac{(M-1)(k-1)*S}{M}} \\ 1 & e^{j2\pi\frac{(1+(k-1)*S)}{M}} & e^{j2\pi\frac{2(1+(k-1)*S)}{M}} & & e^{j2\pi\frac{(M-1)(1+(k-1)*S)}{M}} \\ 1 & e^{j2\pi\frac{(2+(k-1)*S)}{M}} & e^{j2\pi\frac{2(2+(k-1)*S)}{M}} & \cdots & e^{j2\pi\frac{(M-1)(2+(k-1)*S)}{M}} \\ \vdots & \vdots & \vdots & & \vdots \\ 1 & e^{j2\pi\frac{(W-1+(k-1)*S)}{M}} & e^{j2\pi\frac{2(W-1+(k-1)*S)}{M}} & & e^{j2\pi\frac{(M-1)(W-1+(k-1)*S)}{M}} \end{bmatrix} \begin{bmatrix} c_1 \\ c_2 \\ \vdots \\ c_M \end{bmatrix} = \breve{A}_k \mathbf{c}$$

$$\breve{x} = \begin{bmatrix} \breve{x}_1 \\ \breve{x}_2 \\ \vdots \\ \breve{x}_L \end{bmatrix} = \begin{bmatrix} \breve{A}_1 \\ \breve{A}_2 \\ \vdots \\ \breve{A}_L \end{bmatrix} \mathbf{c} = \breve{A}\mathbf{c}$$

$$\breve{\chi} = \breve{D}\breve{x} = \breve{D}\breve{A}\mathbf{c} = \breve{B}\mathbf{c}$$

With above equation, the range spectrum support amplitude vector (c, to be estimated) can be related to the columnized spectrogram, $\breve{\chi}$ by a product with a newly constructed basis matrix $\breve{B}$ (which is the product of the DFT) matrix ($\breve{D}$) and the discrete Fourier synthesis (*e.g.*, inverse DFT) matrix ($\breve{A}$).

Many of the spectrogram elements may be nulled out in the thresholding and zeroing step, so many elements in the $\breve{\chi}$ vector are zeros. As a result, the corresponding rows in $\breve{B}$ have no effect on the equation and as such, these elements of $\breve{\chi}$ and corresponding rows of $\breve{B}$ can be deleted from the equation. Denote $\eta$ as the set of indices pointing to the elements of $\breve{\chi}$ that are not zeroed. The equation may be rewritten as follows, where $\breve{\chi}_\eta$ is $\breve{\chi}$ with the zeroed elements removed and $\breve{B}_\eta$ is $\breve{B}$ with columns corresponding to the zeroed element removed.

$$\breve{\chi}_\eta = \breve{B}_\eta \mathbf{c}$$

The target range spectrum may reconstructed using a linear regression problem of solving c given the nulled-out columnized spectrogram $\breve{\chi}_\eta$ and nulled-out new (DFT-IDFT product) basis matrix $\breve{B}_\eta$. Utilizing the sparse range spectrum, to solve c, sparsity constraints may be used to improve the quality of the result. Sparsity constraint solvers such as Matching Pursuit (MP), Orthogonal Matching Pursuit (OMP), and others can be used. Robust results can be obtained by using Bayesian Linear Regression approaches, such as Sparse Bayesian Learning (SBL) and Bayesian Linear Regression with Cauchy Prior (BLRC), among other solvers.

In connection with one or more aspects of the disclosure, it has been recognized/discovered that relating the solving of sparse c to observed spectrogram of ADC samples, $\breve{\chi}$ (instead of ADC samples directly) can provide beneficial radar signal processing, and the further deletion of interference infested elements of $\breve{\chi}$ and rows of $\breve{B}$ has a positive effect on the solving of the sparse solution of c.

As examples, the Specification describes and/or illustrates aspects useful for implementing the claimed disclosure by way of various circuits or circuitry which may be illustrated as or using terms such as blocks, modules, device, system, unit, controller, communication circuitry, processing circuitry, transmitter, receiver, and/or other circuit-type depictions (*e.g.*, reference numerals 110, 120, 130, 132 and 134 of Figure 1, and 210, 220 and 230 of Figure 2 may depict a block/module as described herein). Such circuits or circuitry may be used together with other elements to exemplify how certain embodiments may be carried out in the form or structures, steps, functions, operations, activities, etc. As examples, wherein such circuits or circuitry may correspond to logic circuitry (which may refer to or include a code-programmed/configured CPU), in one example the logic circuitry may carry out a process or method (sometimes "algorithm") by performing one or more of the various processing steps noted herein, such as may include converting reflections into the time-frequency domain, determining a suppression threshold, and constructing a range response with interference suppressed. Yet another process or method in this context would be recognized in connection with the functions/activities associated with the various method-based blocks in Figures 3 and 4.

Embodiments of the present disclosure may include features recited in the following numbered clauses:

1. An apparatus comprising: communication circuitry to transmit radar signals and to receive reflections of the transmitted radar signals from a target; and processing circuitry to: produce a spectrogram by converting the reflections into a time-frequency domain using a time-frequency analysis; determine at least one suppression threshold for at least one frequency signal in the spectrogram based on frequency characteristics of the converted reflections; and construct a range response characterizing the target and having interference signals removed in the time-frequency domain by converting, into the range response, selected ones of the frequency signals in the spectrogram having a magnitude within the suppression threshold.

2. The apparatus of clause 1, wherein the processing circuitry is to construct the range response by: suppressing interference components of the spectrogram that are above the one or more suppression thresholds and therein providing an interference-suppressed spectrogram; converting the interference-suppressed spectrogram into interference-suppressed reconstructed reflections using an inverse time-frequency analysis; and transforming the reconstructed reflections to the range response using a frequency analysis.

3. The apparatus of clause 1, wherein the processing circuitry is to: convert the reflections into a time-frequency domain using a short-time Fourier Transform (STFT); and construct the range response by: performing an inverse STFT on the selected frequency signals to provide reconstructed reflections; and performing an inverse frequency transform on the reconstructed reflections to generate an output including the range response.

4. The apparatus of clause 1, wherein the processing circuitry is to determine the at least one suppression threshold by determining, for at least one frequency signal, a target signal magnitude and setting the suppression threshold for that frequency signal as a magnitude that exceeds the target signal magnitude.

5. The apparatus of clause 1, wherein the processing circuitry is to: determine the at least one suppression threshold for each spectral line in the spectrogram by: identifying a target signal magnitude for each spectral line, and setting the suppression threshold for each spectral line as a magnitude that exceeds the target signal magnitude for each spectral line; and construct the range response by, for each spectral line, converting ones of the frequency signals in the spectral line within the suppression threshold for that spectral line.

6. The apparatus of clause 1, wherein the processing circuitry is to determine at least one of the suppression thresholds using a histogram analysis to identify a target signal magnitude in which signals above the target signal magnitude are identified as being interference.

7. The apparatus of clause 1, wherein the processing circuitry is to determine the at least one suppression threshold based on statistical analysis.

8. The apparatus of clause 1, wherein the processing circuitry is to process the received reflections by setting values of ones of the frequency signals that are above the threshold to zero.

9. The apparatus of clause 1, wherein the processing circuitry is to construct the range response by reducing ambiguous sidelobes of the reflections, including: constructing a sparse linear regression problem model with the selected frequency signals as an observation vector; and constructing the range response using sparse signal estimation.

10. The apparatus of clause 1, wherein the processing circuitry is to: produce the spectrogram by producing samples of the reflected signals in respective time windows; determine the suppression threshold by determining a suppression threshold for each time window; and construct the range response by converting, for each time window, selected ones of the frequency signals in the time window having a frequency within the suppression threshold for that time window.

11. A method comprising: producing a spectrogram by converting reflections, of transmitted radar signals from a target, into a time-frequency domain using a time-frequency analysis; determining at least one suppression threshold for at least one frequency signal in the spectrogram based on frequency characteristics of the converted reflections; and constructing a range response characterizing the target and having interference signals suppressed in the time-frequency domain by converting, into the range response, selected ones of the frequency signals in the spectrogram having a magnitude within the suppression threshold.

12. The method of clause 11, wherein constructing the range response includes: suppressing interference components of the spectrogram that are above the one or more suppression thresholds and therein providing an interference-suppressed spectrogram; converting the interference-suppressed spectrogram into interference-suppressed reconstructed reflections using an inverse time-frequency analysis; and transforming the reconstructed reflections to the range response using a frequency analysis.

13. The method of clause 11, including converting the reflections into a time-frequency domain using a short-time Fourier Transform (STFT), and wherein constructing the range response includes: performing an inverse STFT on the selected frequency signals to provide reconstructed reflections; and performing an inverse frequency transform on the reconstructed reflections to generate an output including the range response.

14. The method of clause 11, wherein determining the at least one suppression threshold includes determining, for at least one frequency signal, a target signal magnitude and setting the suppression threshold for that frequency signal as a magnitude that exceeds the target signal magnitude.

15. The method of clause 11, wherein: determining the at least one suppression threshold for each spectral line in the spectrogram includes identifying a target signal magnitude for each spectral line, and setting the suppression threshold for each spectral line as a magnitude that exceeds the target signal magnitude for each spectral line; and constructing the range response includes, for each spectral line, converting ones of the frequency signals in the spectral line within the suppression threshold for that spectral line.

16. The method of clause 11, wherein determining the at least one of the suppression thresholds includes using a histogram analysis to identify a target signal magnitude in which signals above the target signal magnitude are identified as being interference.

17. The method of clause 11, wherein determining the at least one suppression threshold is carried out based on statistical analysis.

18. The method of clause 11, wherein constructing the range response includes setting values of ones of the frequency signals that are above the threshold to zero.

19. The method of clause 11, wherein constructing the range response includes reducing ambiguous sidelobes of the reflections by: constructing a sparse linear regression problem model with the selected frequency signals as an observation vector; and constructing the range response using sparse signal estimation.

20. The method of clause 11, wherein: producing the spectrogram includes producing samples of the reflected signals in respective time windows; determining the at least one suppression threshold includes determining a suppression threshold for each time window; and constructing the range response includes converting, for each time window, selected ones of the frequency signals in the time window having a frequency within the suppression threshold for that time window.

For example, in certain of the above-discussed embodiments, one or more modules are discrete logic circuits or programmable logic circuits configured and arranged for implementing these operations/activities, as may be carried out in the approaches shown in Figures 3 and 4. In certain embodiments, such a programmable circuit is one or more computer circuits, including memory circuitry for storing and accessing a program to be executed as a set (or sets) of instructions (and/or to be used as configuration data to define how the programmable circuit is to perform), and an algorithm or process as described here is used by the programmable circuit to perform the related steps, functions, operations, activities, *etc.* Depending on the application, the instructions (and/or configuration data) can be configured for implementation in logic circuitry, with the instructions (whether characterized in the form of object code, firmware or software) stored in and accessible from a memory (circuit). As another example, where the Specification may make reference to a "first [type of structure]", a "second [type of structure]", etc., where the [type of structure] might be replaced with terms such as ["circuit", "circuitry" and others], the adjectives "first" and "second" are not used to connote any description of the structure or to provide any substantive meaning; rather, such adjectives are merely used for English-language antecedence to differentiate one such similarly-named structure from another similarly-named structure (*e.g.*, "first circuit configured to convert ..." is interpreted as "circuit configured to convert...").

Based upon the above discussion and illustrations, those skilled in the art will readily recognize that various modifications and changes may be made to the various embodiments without strictly following the exemplary embodiments and applications illustrated and described herein. For example, methods as exemplified in the Figures may involve steps carried out in various orders, with one or more aspects of the embodiments herein retained, or may involve fewer or more steps. For instance, certain embodiments may be implemented as a circuit or circuit block implemented in a receiver, for carrying out the interference suppression, and may otherwise be utilized with a variety of types of radar communication circuitry. As another example, one or more additional circuits implementing transmission or reception of radar signals/reflections may be utilized. Such modifications do not depart from the scope of various aspects of the disclosure, including aspects set forth in the claims.

**Claims**

1.  An apparatus comprising:

    communication circuitry to transmit radar signals and to receive reflections of the transmitted radar signals from a target; and
    processing circuitry to:

    produce a spectrogram by converting the reflections into a time-frequency domain using a time-frequency analysis;
    determine at least one suppression threshold for at least one frequency signal in the spectrogram based on frequency characteristics of the converted reflections; and
    construct a range response characterizing the target and having interference signals removed in the time-frequency domain by converting, into the range response, selected ones of the frequency signals in the spectrogram having a magnitude within the suppression threshold.

2.  The apparatus of claim 1, wherein the processing circuitry is to construct the range response by:

    suppressing interference components of the spectrogram that are above the one or more suppression thresholds and therein providing an interference-suppressed spectrogram;
    converting the interference-suppressed spectrogram into interference-suppressed reconstructed reflections using an inverse time-frequency analysis; and
    transforming the reconstructed reflections to the range response using a frequency analysis.

3.  The apparatus of claim 1 or 2, wherein the processing circuitry is to:

    convert the reflections into a time-frequency domain using a short-time Fourier Transform (STFT); and
    construct the range response by:

    performing an inverse STFT on the selected frequency signals to provide reconstructed reflections; and
    performing an inverse frequency transform on the reconstructed reflections to generate an output including the range response.

4.  The apparatus of any of the claims 1 to 3, wherein the processing circuitry is to determine the at least one suppression threshold by determining, for at least one frequency signal, a target signal magnitude and setting the suppression threshold for that frequency signal as a magnitude that exceeds the target signal magnitude.

**5.** The apparatus of any of the claims 1 to 3, wherein the processing circuitry is to:

    determine the at least one suppression threshold for each spectral line in the spectrogram by:

        identifying a target signal magnitude for each spectral line, and
        setting the suppression threshold for each spectral line as a magnitude that exceeds the target signal magnitude for each spectral line; and

    construct the range response by, for each spectral line, converting ones of the frequency signals in the spectral line within the suppression threshold for that spectral line.

**6.** The apparatus of any of the claims 1 to 5, wherein the processing circuitry is to determine at least one of the suppression thresholds using a histogram analysis to identify a target signal magnitude in which signals above the target signal magnitude are identified as being interference.

**7.** The apparatus of any of the claims 1 to 5, wherein the processing circuitry is to determine the at least one suppression threshold based on statistical analysis.

**8.** The apparatus of any of the claims 1 to 7, wherein the processing circuitry is to process the received reflections by setting values of ones of the frequency signals that are above the threshold to zero.

**9.** The apparatus of any of the claims 1 to 8, wherein the processing circuitry is to construct the range response by reducing ambiguous sidelobes of the reflections, including:

    constructing a sparse linear regression problem model with the selected frequency signals as an observation vector; and
    constructing the range response using sparse signal estimation.

**10.** The apparatus of any of the claims 1 to 9, wherein the processing circuitry is to:

    produce the spectrogram by producing samples of the reflected signals in respective time windows;
    determine the suppression threshold by determining a suppression threshold for each time window; and
    construct the range response by converting, for each time window, selected ones of the frequency signals in the time window having a frequency within the suppression threshold for that time window.

**11.** A method comprising:

    producing a spectrogram by converting reflections, of transmitted radar signals from a target, into a time-frequency domain using a time-frequency analysis;
    determining at least one suppression threshold for at least one frequency signal in the spectrogram based on frequency characteristics of the converted reflections; and
    constructing a range response characterizing the target and having interference signals suppressed in the time-frequency domain by converting, into the range response, selected ones of the frequency signals in the spectrogram having a magnitude within the suppression threshold.

**12.** The method of claim 11, wherein constructing the range response includes:

    suppressing interference components of the spectrogram that are above the one or more suppression thresholds and therein providing an interference-suppressed spectrogram;
    converting the interference-suppressed spectrogram into interference-suppressed reconstructed reflections using an inverse time-frequency analysis; and
    transforming the reconstructed reflections to the range response using a frequency analysis.

**13.** The method of claim 11 or 12, including converting the reflections into a time-frequency domain using a short-time Fourier Transform (STFT), and wherein constructing the range response includes:

    performing an inverse STFT on the selected frequency signals to provide reconstructed reflections; and
    performing an inverse frequency transform on the reconstructed reflections to generate an output including the range response.

14. The method of claim 11, wherein determining the at least one suppression threshold includes determining, for at least one frequency signal, a target signal magnitude and setting the suppression threshold for that frequency signal as a magnitude that exceeds the target signal magnitude.

15. The method of any of the claims 11 to 14, wherein:

determining the at least one suppression threshold for each spectral line in the spectrogram includes identifying a target signal magnitude for each spectral line, and setting the suppression threshold for each spectral line as a magnitude that exceeds the target signal magnitude for each spectral line; and
constructing the range response includes, for each spectral line, converting ones of the frequency signals in the spectral line within the suppression threshold for that spectral line.

**FIG. 1**

EP 4 083 654 A1

**FIG. 2**

EP 4 083 654 A1

Input ADC samples — 310

**Interference Cancellation**

Compute Spectrogram using Short-Time Fourier Transform (STFT) — 320

Compute absolute value of spectrogram samples — 321

For each spectrogram's frequency signal, determine a threshold based on the statistics of the magnitudes — 322

For each spectrogram's frequency signal, zeroing out samples that have magnitude greater than the computed threshold — 323

Compute Inverse STFT — 324

Compute Range Spectrum (e.g. FFT) — 330

Output Range Spectrum Samples — 340

**FIG. 3**

410

Input ADC samples

**Interference Cancellation**

420

Compute Spectrogram using Short-Time Fourier Transform (STFT)

421

Compute absolute value of spectrogram samples

422

For each spectrogram's frequency signal, determine a threshold based on the statistics of the magnitudes

423

For each spectrogram's frequency signal, zeroing (nulling) out samples that have magnitude greater than the computed threshold

**Sidelobe suppression and SNR recovery**

430

Construct Linear Regression Problem $\breve{\chi}_\eta = \breve{B}_\eta c$ with columnized nulled spectrogram, $\breve{\chi}_\eta$, as observation vector and Nulled Discrete Fourier Analysis Synthesis Product matrix, $\breve{B}_\eta$, as the basis matrix and solve for solving the spectrum support amplitude vector $c$

431

Solve sparse $c$ given $\breve{\chi}_\eta = \breve{B}_\eta c$ using sparsity constraint estimation approaches (e.g. SBL, BLRC, OMP)

440

Output Range Spectrum Samples

**FIG. 4**

Europäisches
Patentamt

European
Patent Office

Office européen
des brevets

# EUROPEAN SEARCH REPORT

**Application Number**

EP 22 16 8669

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JIANPING WANG: "CFAR-Based Interference Mitigation for FMCW Automotive Radar Systems", ARXIV.ORG, CORNELL UNIVERSITY LIBRARY, 201 OLIN LIBRARY CORNELL UNIVERSITY ITHACA, NY 14853, 4 January 2021 (2021-01-04), XP081852062, * page 1 - page 9 * ----- | 1-15 | INV. G01S7/35 G01S13/34 |

**TECHNICAL FIELDS SEARCHED (IPC)**

G01S

The present search report has been drawn up for all claims

| Place of search | Date of completion of the search | Examiner |
|---|---|---|
| Munich | 12 September 2022 | Beer, Mark |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
...........................................................................................
& : member of the same patent family, corresponding document

EPO FORM 1503 03.82 (P04C01)